(19) **Europäisches Patentamt / European Patent Office / Office européen des brevets**

(11) **EP 2 577 322 B1**

(12) **FASCICULE DE BREVET EUROPEEN**

(45) Date de publication et mention de la délivrance du brevet:
**12.03.2014 Bulletin 2014/11**

(21) Numéro de dépôt: **11723425.2**

(22) Date de dépôt: **26.05.2011**

(51) Int Cl.:
***G01P 5/08*** *(2006.01)*

(86) Numéro de dépôt international:
**PCT/EP2011/058683**

(87) Numéro de publication internationale:
**WO 2011/151257 (08.12.2011 Gazette 2011/49)**

(54) **VELOCIMETRE ET PROCEDE DE MESURE DE LA VITESSE D'ECOULEMENT D'UN FLUIDE ELECTRIQUEMENT CONDUCTEUR**

GESCHWINDIGKEITSMESSER UND VERFAHREN ZUM MESSEN DER STRÖMUNGSGESCHWINDIGKEIT EINER ELEKTRISCH LEITENDEN FLÜSSIGKEIT

VELOCIMETRE AND METHOD FOR MEASURING THE SPEED OF FLOW OF AN ELECTRICALLY CONDUCTING FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2010 FR 1054250**

(43) Date de publication de la demande:
**10.04.2013 Bulletin 2013/15**

(73) Titulaires:
- **Ecole Normale Supérieure de Lyon**
  **69342 Lyon 7ème (FR)**
- **Centre National de la Recherche Scientifique**
  **75016 Paris (FR)**

(72) Inventeurs:
- **PINTON, Jean-François**
  **F-69660 Collonges au Mont d'Or (FR)**
- **PLIHON, Nicolas**
  **F-69007 Lyon (FR)**
- **VERHILLE, Gautier**
  **13005 Marseille (FR)**
- **MIRALLES, Sophie**
  **F-69007 Lyon (FR)**

(74) Mandataire: **Colombo, Michel et al**
**Brevinnov**
**310 avenue Berthelot**
**69008 Lyon (FR)**

(56) Documents cités:
**US-A- 5 426 983    US-B1- 6 321 766**

**Description**

L'invention concerne un vélocimètre pour mesurer la vitesse d'écoulement d'un fluide électriquement conducteur et un procédé de mesure de la vitesse d'écoulement d'un fluide électriquement conducteur.

Un fluide électriquement conducteur est un fluide contenant des porteurs de charge mobiles. Par exemple, le sodium liquide, le gallium liquide sont des fluides électriquement conducteurs dont la conductivité est de l'ordre de $10^6$ S.m$^{-1}$. Les plasmas sont également des fluides conducteurs.

La mesure de la vitesse d'écoulement de fluides électriquement conducteurs intervient notamment dans l'industrie métallurgique dans le contrôle de chaînes de production. Ces mesures interviennent également dans les circuits de refroidissement de métal liquide des centrales nucléaires. Elles peuvent également intervenir dans les procédés plasma (dépollution, gravure ou dépôt de couches minces).

Le déposant connaît un vélocimètre comportant :

- une source de champ magnétique primaire dont les lignes de champ traversent le fluide électriquement conducteur, et
- un premier et un deuxième capteurs de champ magnétique mesurant chacun l'intensité du champ magnétique dans une même première direction de mesure.

Par direction de mesure on désigne un ensemble de vecteurs colinéaires orientés dans le même sens.

En absence d'écoulement du fluide, les lignes de champ de la source de champ magnétique primaire ont une forme initiale. Les capteurs mesurent alors une intensité du champ magnétique à vitesse d'écoulement nulle. Lors de l'écoulement du fluide, le mouvement des porteurs de charge mobiles déforme les lignes de champs traversant le fluide. Ainsi, l'intensité mesurée par les capteurs varie avec la vitesse d'écoulement du fluide. Pour augmenter la sensibilité des mesures, dans les vélocimètres connus, les premier et deuxième capteurs sont disposés symétriquement par rapport à un plan de symétrie de la source du champ magnétique primaire et les intensités mesurées par ces deux capteurs sont additionnées. Un plan de symétrie de la source du champ magnétique primaire est un plan de symétrie pour les lignes du champ magnétique primaire.

De plus, les capteurs sont placés le plus proche possible de la source de manière à être plus sensible au champ magnétique primaire qu'à d'autres champs magnétiques. Malgré ces précautions, les vélocimètres connus restent sensibles aux perturbations causées par un champ magnétique extérieur tel que le champ magnétique terrestre ou un champ magnétique rayonné par un appareil électrique disposé à proximité. Par ailleurs, la linéarité des vélocimètres connus est perfectible.

Par « linéarité », on désigne l'écart maximal entre la courbe caractéristique linéaire idéale qui relie la vitesse mesurée au signal de sortie du vélocimètre et sa courbe caractéristique réelle.

L'invention vise à résoudre un ou plusieurs de ces inconvénients.

Elle a donc pour objet un vélocimètre pour mesurer la vitesse d'écoulement d'un fluide électriquement conducteur, dans lequel :

- les deux capteurs sont disposés de manière à ce que, en absence d'écoulement du fluide électriquement conducteur, la différence entre les intensités mesurées par les deux capteurs est non nulle, et
- le vélocimètre comporte une unité de traitement apte à calculer la vitesse d'écoulement du fluide dans une direction parallèle à la première direction de mesure à partir de la différence entre les intensités mesurées par les deux capteurs.

Le fait d'utiliser la différence des intensités mesurées permet d'améliorer la linéarité du vélocimètre comme cela est expliqué plus loin dans la description. De plus, cette mesure différentielle permet de limiter la dépendance de la vitesse mesurée :

- aux variations temporelles du champ magnétique extérieur,
- au champ induit par les gradients de vitesse en présence du champ magnétique extérieur, et
- aux variations spatio-temporelles du champ magnétique induit par les gradients.

Les modes de réalisation de ce vélocimètre peuvent comporter une ou plusieurs des caractéristiques suivantes :

■ les deux capteurs sont disposés de manière à ce que, en absence d'écoulement du fluide électriquement conducteur, la différence entre les intensités du champ magnétique primaire mesurées par les deux capteurs est supérieure à la plus petite de ces intensités,
■ la source comporte un axe d'aimantation et les deux capteurs sont disposés d'un même côté d'un plan contenant l'axe d'aimantation,

■ le premier capteur est situé à une distance D16 de la source de champ magnétique primaire, et le deuxième capteur est situé à une distance $D19_1$ de la source de champ magnétique primaire, de manière à ce que la valeur absolue de la différence des distances D16 et $D19_1$ est supérieure à la plus petite des distances D16 et $D19_1$,

■ un perturbateur magnétique est disposé plus proche de l'un des capteurs que de l'autre de manière à ce qu'en absence d'écoulement du fluide, l'intensité mesurée par le premier capteur est au moins deux fois supérieure à l'intensité mesurée par le deuxième capteur,

■ les premier et deuxième capteurs sont disposés à égale distance de la source de champ primaire,

■ le vélocimètre comprend un troisième capteur de champ magnétique, le troisième capteur étant apte à mesurer le champ magnétique dans la première direction de mesure, le troisième capteur étant disposé par rapport à la source de manière à ce que les intensités mesurées par le premier et le troisième capteurs soient égales en absence d'écoulement, et l'unité de traitement est apte à calculer la vitesse d'écoulement du fluide à partir :

- de la différence des intensités mesurées par les premier et deuxième capteurs,
- de la différence des intensités mesurées par les deuxième et troisième capteurs, et
- de la somme de ces différences.

■ la source de champ magnétique primaire est une source de champ magnétique alternatif,

■ le champ magnétique primaire est modulé par un signal modulant prédéterminé et les intensités mesurées par les capteurs sont démodulées à l'aide de ce signal modulant, et

■ le vélocimètre comporte un quatrième et un cinquième capteurs de champ magnétique, mesurant l'intensité du champ magnétique dans au moins une seconde direction de mesure sécante à la première direction de mesure, et l'unité de traitement est apte à calculer la vitesse d'écoulement du fluide dans la seconde direction de mesure des quatrième et cinquième capteurs à partir de la différence entre les intensités mesurées par les quatrième et cinquième capteurs.

Ces modes de réalisation du vélocimètre présentent en outre les avantages suivants :

- placer les premier et deuxième capteurs de manière à ce que la différence des intensités du champ magnétique primaire mesurées par ces capteurs est supérieure à la plus petite de ces intensités permet d'améliorer la linéarité du vélocimètre tout en conservant la sensibilité du capteur le plus proche de la source;
- placer les deux capteurs du même côté permet de les rapprocher et de compenser de façon plus efficace la non linéarité causée par le gradient de la vitesse de l'écoulement;
- l'ajout d'un perturbateur magnétique permet de réaliser des vélocimètres plus compact puisqu'il n'est alors plus nécessaire de placer le deuxième capteur loin de la source pour que celui-ci mesure une intensité du champ magnétique primaire négligeable devant l'intensité du champ magnétique primaire mesurée par le premier capteur;
- l'ajout d'un troisième capteur mesurant le même champ magnétique que le premier capteur permet d'accroître la sensibilité du vélocimètre;
- la modulation du champ magnétique primaire rayonné par la source, couplée à la démodulation de l'intensité mesurée par les capteurs permet la mise en place d'une détection synchrone limitant les conséquences du bruit;
- l'ajout d'un troisième, d'un quatrième et d'un cinquième capteurs biaxes permet de mesurer la vitesse d'écoulement du fluide dans trois directions non-colinéaires de l'espace.

L'invention concerne également un procédé de mesure de la vitesse d'écoulement d'un fluide électriquement conducteur comprenant l'émission d'un champ magnétique primaire dont les lignes de champ traversent le fluide électriquement conducteur, ce procédé comportant :

- la mesure de l'intensité du champ magnétique dans une première direction de mesure par deux capteurs disposés de manière à ce que, en absence d'écoulement du fluide électriquement conducteur, la différence entre les intensités mesurées par les deux capteurs est non nulle, et
- le calcul de la vitesse d'écoulement à partir de la différence entre les intensités mesurées par les deux capteurs.

L'invention sera mieux comprise à la lecture de la description qui va suivre, donnée uniquement à titre d'exemple non limitatif et faite en se référant aux dessins sur lesquels :

- la figure 1 est une illustration schématique en vue de côté d'un vélocimètre au voisinage d'une canalisation recevant un fluide conducteur dont la vitesse d'écoulement est nulle,
- la figure 2 est une illustration schématique en vue de côté du vélocimètre de la figure 1 lorsque la vitesse d'écoulement du fluide conducteur est non nulle,

- la figure 3 est un organigramme d'un procédé de mesure de la vitesse d'écoulement d'un fluide conducteur à l'aide du vélocimètre de la figure 1,
- la figure 4 est une illustration schématique en vue de côté d'une première variante du vélocimètre des figures 1 et 2,
- la figure 5 est illustration schématique en une vue de côté d'une deuxième variante du vélocimètre des figures 1 et 2, et
- la figure 6 est une illustration schématique en vue de côté d'une troisième variante du vélocimètre des figures 1 et 2.

Dans ces figures, les mêmes références sont utilisées pour désigner les mêmes éléments.

Dans la suite de cette description, les caractéristiques et fonctions bien connues de l'homme du métier ne sont pas décrites en détail.

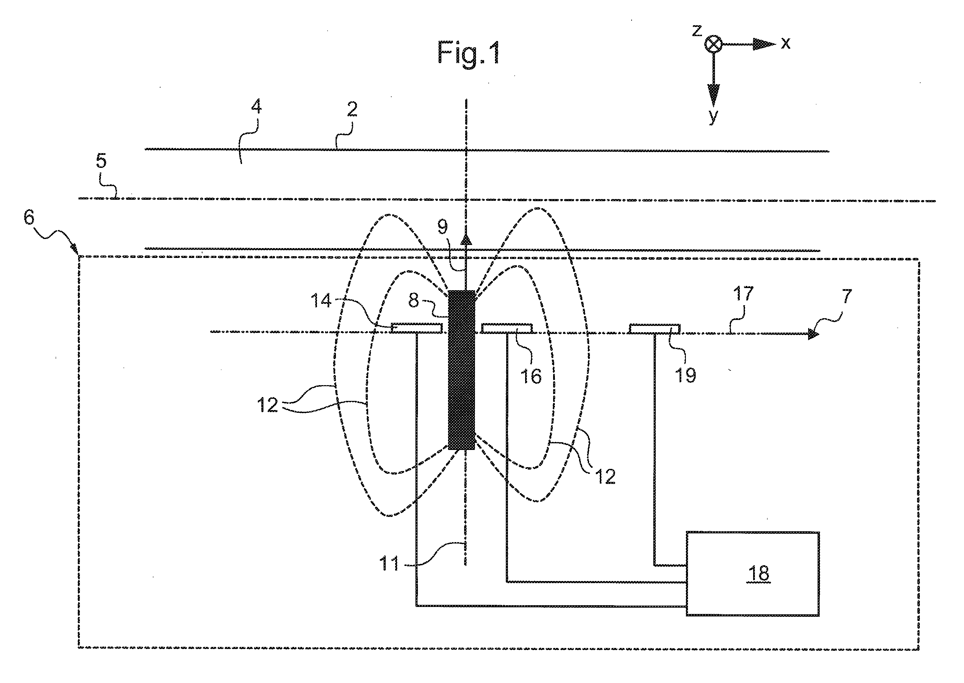

La figure 1 est orientée par un repère orthonormé *(x, y, z),* dans lequel la direction $\underline{x}$ est dite horizontale et la direction $\underline{y}$ est dite verticale. Elle illustre une canalisation 2. Les parois de la canalisation 2 sont perméables au champ magnétique. Cette canalisation 2 sert à guider un fluide 4 conducteur le long d'une direction d'écoulement 5 parallèlement à la direction $\underline{x}$. Par exemple, le fluide 4 a une conductivité supérieure à 10 S.m$^{-1}$ et de préférence, supérieure à 100 ou 1000 S. m$^{-1}$. Ici, le fluide 4 est un liquide tel que le gallium liquide dont la conductivité électrique est égale à 6,78.1 10$^6$ S.m$^{-1}$.

La figure 1 illustre le cas où il y a absence d'écoulement du fluide 4 dans la canalisation 2.

La vitesse d'écoulement du fluide 4 est mesurée par un vélocimètre 6. Par exemple, le vélocimètre 6 est plaqué sur la périphérie extérieure de la canalisation 2 sans que celui-ci ne soit logé dans un renfoncement à l'intérieur de la canalisation 2. Le vélocimètre 6 comprend une source 8 de champ magnétique primaire. Par exemple, la source 8 est un aimant permanent présentant un plan de symétrie parallèle aux directions y et z. Plus précisément, dans ce cas, la source 8 présente un axe de symétrie contenu dans le plan de symétrie.

Ici, la source 8 rayonne un champ magnétique supérieur ou égal à 0,2 Tesla. La source 8 possède un moment magnétique 9 porté par un axe d'aimantation 11 parallèle à la direction $\underline{y}$. L'axe d'aimantation 11 est confondu avec l'axe de symétrie de la source 8. La source 8 est disposée de manière à ce que les lignes de champs 12 du champ magnétique primaire traversent le fluide 4. Les lignes de champ 12 sont symétriques par rapport à un plan passant par l'axe 11 et parallèle aux directions $\underline{y}$ et $\underline{z}$. Par exemple, la source 8 est un cylindre ou un parallélogramme. La source 8 est disposée à quelques centimètres de la canalisation 2.

Pour simplifier la description, ce premier mode de réalisation est décrit dans le cas particulier où le vélocimètre 6 mesure la vitesse d'écoulement dans une seule direction 7 de mesure. Des modes de réalisation d'un vélocimètre apte à mesurer la vitesse d'écoulement dans plusieurs directions de mesure sont décrits plus loin. Ici, Le vélocimètre 6 comprend deux capteurs monoaxes 14 et 16 aptes à mesurer l'intensité d'un champ magnétique dans unela même direction 7 de mesure parallèle à la direction $\underline{x}$. Les capteurs 14 et 16 sont, par exemple, alignés sur un axe 17 perpendiculaire à l'axe 11. Les capteurs 14 et 16 sont situés de part et d'autre de la source 8 à des distances, respectivement, D14 et D16. Ici, les capteurs 14 et 16 sont disposés de telle sorte qu'en absence d'écoulement du fluide 4, les intensités mesurées par les capteurs sont égales. A cet effet, les capteurs 14 et 16 sont disposés de façon symétrique par rapport au plan passant par l'axe 11 et parallèle aux directions $\underline{y}$ et $\underline{z}$. Les distances D14 et D16 sont donc égales. Par exemple, les capteurs 14 et 16 sont des sondes à effet Hall.

Un troisième capteur monoaxe 19 mesure l'intensité d'un champ magnétique dans la même direction de mesure que les capteurs 14 et 16. Le capteur 19 est, par exemple, aligné avec les capteurs 14 et 16 sur l'axe 17. Le capteur 19 est disposé par rapport à la source 8 de manière à ce qu'en absence d'écoulement du fluide 4 dans la canalisation 2, la différence entre les intensités des champs magnétiques mesurés par les capteurs 16 et 19 est non nulle (**condition C0**). Il est situé à une distance D19$_1$ de la source 8.

De préférence, le capteur 19 est disposé de manière à ce qu'en absence d'écoulement du fluide 4 dans la canalisation 2, la différence entre les intensités des champs magnétiques mesurés par les capteurs 16 et 19 est supérieure à la plus petite de ces intensités (**condition C1**). A cet effet, dans ce mode de réalisation, D19$_1$ est choisie de manière à ce que la valeur absolue de la différence entre les distances D16 et D19$_1$ est supérieure à la plus petite des distances D16 et D19$_1$. Les capteurs 14, 16 et 19 sont reliés à une unité de traitement 18. L'unité de traitement 18 est apte :

- à calculer les différences entre les intensités mesurées par les capteurs 16,19 et 14,19, et
- à calculer la vitesse d'écoulement $v_x$ du fluide 4 dans la direction 7.

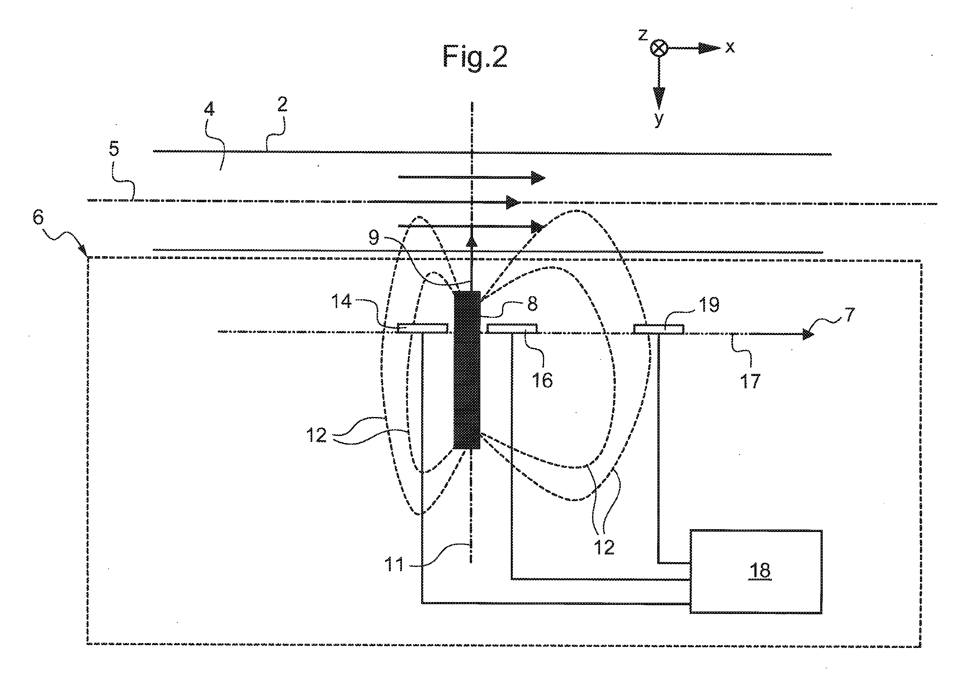

La figure 2 illustre le vélocimètre 6 de la figure 1 lorsque le fluide 4 s'écoule dans la canalisation 2. Le mouvement des porteurs de charge du fluide 4 dans un champ fixe entraîne l'apparition d'un champ induit $B_i$ dépendant de la vitesse d'écoulement $v_x$. Les intensités mesurées par les capteurs 14, 16 et 19, sont donc fonction de la vitesse d'écoulement $v_x$.

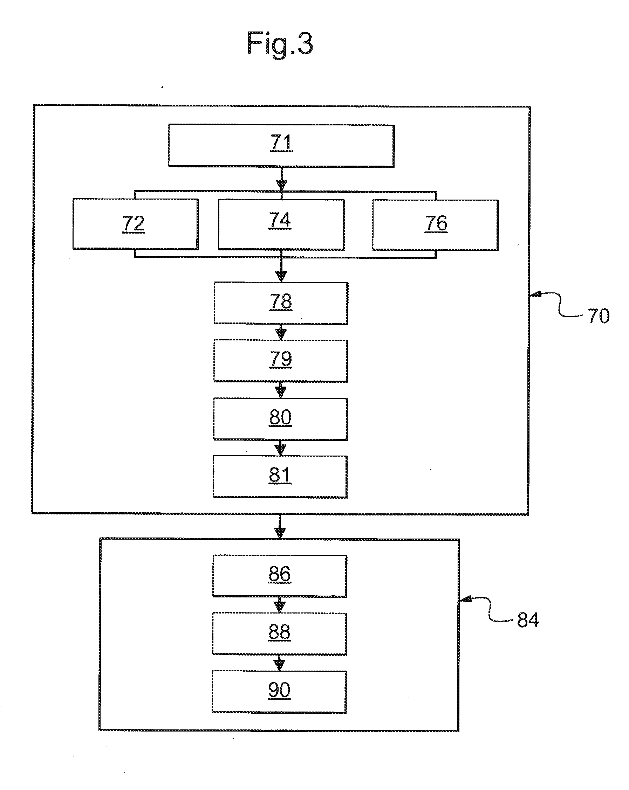

Le fonctionnement du vélocimètre 6 va maintenant être décrit en regard du procédé de la figure 3.

Initialement, lors d'une étape 70, le vélocimètre 6 est calibré. Par exemple, à cet effet, dans un premier temps, lors d'une tâche 71, l'écoulement du fluide 4 est arrêté.

Ensuite, lors d'une tâche 72 la source 8 rayonne le champ magnétique primaire dont les lignes de champ 12

traversent le fluide 4.

En parallèle, lors d'une tâche 74, les capteurs 14 et 16 mesurent l'intensité du champ magnétique en absence d'écoulement du fluide 4 dans la canalisation 2. Les intensités $B_{14permanent}$ et $B_{16permanent}$ du champ magnétique sont mesurées, respectivement, par les capteurs 14 et 16. Ces intensités $B_{14permanent}$ et $B_{16permanent}$ sont définies par les relations suivantes :

$$B_{14}\,permanent = B_{T14} + B_{S14}$$

$$B_{16}\,permanent = B_{T16} + B_{S16}$$

où,

- $B_{T14}$ et $B_{T16}$ sont les intensités du champ magnétique extérieur mesurées, respectivement, par les capteurs 14 et 16, et
- $B_{S14}$ et $B_{S16}$ sont les intensités du champ magnétique primaire rayonné par la source 8 mesurées, respectivement, par les capteurs 14 et 16.

Le champ magnétique extérieur est un champ magnétique spatialement homogène et uniforme à l'échelle des distances $D14$, $D16$ et $D19_1$. Ce champ provient d'une source de champ magnétique extérieure au vélocimètre 6. Par exemple, le champ magnétique extérieur est le champ magnétique terrestre.

Les intensités $B_{14permanent}$ et $B_{16permanent}$ mesurées sont mémorisées par l'unité de traitement 18.

Parallèlement aux tâches 72 et 74, lors d'une tâche 76, le capteur 19 mesure l'intensité $B_{19permanent}$ du champ magnétique. L'intensité $B_{19permanent}$ est définie par la relation suivante :

$$B_{19}\,permanent = B_{T19} + B_{S19}$$

où,

- $B_{T19}$ est l'intensité du champ magnétique extérieur mesurée par le capteur 19, et
- $B_{S19}$ est l'intensité du champ magnétique primaire rayonné par la source 8 mesurée par le capteur 19.

L'intensité $B_{19}\,permanent$ mesurée est mémorisée par l'unité de traitement 18.

Une fois les intensités $B_{14permanent}$, $B_{16permanent}$ et $B_{19permanent}$ mesurées et mémorisées, lors d'une tâche 78, la vitesse d'écoulement du fluide 4 dans la canalisation 2 est fixée à une vitesse connue $v_{1x}$ non nulle. Par exemple, cette vitesse $v_{1x}$ est fixée par une pompe régulée par un vélocimètre.

Ensuite, lors d'une tâche 79, les intensités $B_{14}$, $B_{16}$ et $B_{19}$ du champ magnétique sont mesurées par les capteurs 14, 16 et 19 et stockées dans l'unité de traitement. Les intensités $B_{14}$, $B_{16}$ et $B_{19}$ sont définies par les relations suivantes.

$$B_{14} = B_{T14} + B_{S14} + B_{i14}$$

$$B_{16} = B_{T16} + B_{S16} + B_{i16}$$

$$B_{19} = B_{T19} + B_{S19} + B_{i19}$$

où $B_{i14}$, $B_{i16}$ et $B_{i19}$ sont les intensités du champ magnétique induit, mesurées, respectivement, par les capteurs 14, 16 et 19.

Ce sont ces intensités $B_{i14}$, $B_{i16}$ et $B_{i19}$ qui sont fonctions de la vitesse $v_{1x}$. A l'inverse, les intensités $B_{T14}$, $B_{T16}$, $B_{T19}$, $B_{S14}$, $B_{S16}$ et $B_{S19}$ sont indépendantes de la vitesse $V_{1x}$.

Lors d'une tâche 80, l'unité de traitement 18 soustrait aux intensités $B_{14}$, $B_{16}$ et $B_{19}$, respectivement, les intensités $B_{14permanent}$, $B_{16permanent}$ et $B_{19permanent}$ mémorisées pour obtenir les intensités $B_{i14}$, $B_{i16}$ et $B_{i19}$. Par exemple, les intensités $B_{i14}$, $B_{i16}$ et $B_{i19}$ obtenues pour la vitesse $v_{1x}$ sont mémorisées par l'unité de traitement 18.

Lors d'une tâche 81, l'unité de traitement 18 calcule une pente $\underline{K}$ du vélocimètre 6. Cette pente lie les intensités $B_{i14}$, $B_{i16}$ et $B_{i19}$ à la vitesse $V_{1x}$ d'écoulement du fluide 4. Plus précisément, la pente $\underline{K}$ est celle qui relie les différences entre les intensités $B_{i14}$, $B_{i19}$ et $B_{i16}$, $B_{i19}$ à la vitesse $v_{1x}$.

La proportionnalité de la vitesse à ces différences est expliquée à l'aide des relations suivantes. Dans la suite de cette description, pour simplifier les explications et les équations, on suppose:

- que le fluide 4 est incompressible,
- que les mesures sont réalisées en régime permanent.

Dans ces conditions, l'équation E1 d'induction du champ magnétique mesuré par le capteur 16 est la suivante :

$$\frac{\partial B_{16}}{\partial t} = -(v.\nabla).B_{16} + (B_{16}.\nabla).v + \lambda.\Delta.B_{16} \quad \text{(E1)}$$

où,

- $\Delta$ est l'opérateur mathématique Laplacien,
- $\nabla$ est l'opérateur mathématique gradient, et
- $v$ est la vitesse d'écoulement dans les trois directions $\underline{x}$, $\underline{y}$, et $\underline{z}$ dont les composantes selon ces trois directions sont notées, respectivement, $v_x$, $v_y$, et $v_z$.

En régime permanent, l'équation E1 devient:

$$0 = -(v.\nabla).B_{16} + (B_{16}.\nabla).v + \lambda.\Delta.B_{16}$$

L'équation E1 peut également s'écrire de la façon suivante :

$$0 = -(v.\nabla).(B_{T16} + B_{S16} + B_{i16}) + ((B_{T16} + B_{S16} + B_{i16}).\nabla).v + \lambda.\Delta.(B_{T16} + B_{S16} + B_{i16})$$

Puisque le champ extérieur est uniforme et homogène dans l'espace autour du vélocimètre 6, on peut écrire :

$$\nabla B_{T16} = 0 \quad \text{et} \quad \Delta B_{T16} = 0$$

De plus, dans la majorité des cas, le nombre de Reynolds magnétique du fluide 4 est faible de sorte que l'on peut négliger $B_{i16}$ devant $B_{S16}$. Enfin, le Laplacien $\Delta B_{S16}$ est négligeable en dehors de la source 8. L'équation E1 devient alors :

$$0 = -(v.\nabla).B_{S16} + ((B_{T16} + B_{S16}).\nabla).v + \lambda.\Delta.B_{i16}$$

Ici, le terme $\frac{1}{\lambda}\Delta^{-1}(B_{S16}.\nabla).v$ est négligé devant les autres termes intervenants, l'intensité $B_{i16}$ est donc estimée par la relation suivante:

$$B_{i16} = \frac{1}{\lambda}\Delta^{-1}(v.\nabla).B_{S16} - \frac{1}{\lambda}\Delta^{-1}(B_{T16}.\nabla).v$$

De façon similaire, l'intensité $B_{i14}$ est estimée par la relation suivante:

$$B_{i14} = \frac{1}{\lambda}\Delta^{-1}(v.\nabla).B_{S14} - \frac{1}{\lambda}\Delta^{-1}(B_{T14}.\nabla).v$$

Le même raisonnement que précédemment est appliqué pour le capteur 19. Ici, au niveau du capteur 19 l'intensité du champ magnétique primaire rayonné par la source 8 est beaucoup plus faible qu'au niveau du capteur 14 ou 16. En effet, l'intensité du champ magnétique de la source 8 décroît en $\dfrac{1}{R^3}$ , où R est la distance qui sépare la source 8 du point où est mesuré l'intensité du champ magnétique. Par exemple, si le capteur 19 est disposé comme ici, de manière à ce qu'en absence d'écoulement du fluide 4, la différence entre les intensités $B_{S14}$ et $B_{S19}$ est supérieure à $B_{S\underline{14}}$, alors l'intensité $B_{S\underline{19}}$ peut être négligée devant les intensités $B_{T\underline{19}}$ et $B_{i\underline{19}}$. L'intensité $B_{i\underline{19}}$ est alors estimée par la relation suivante :

$$B_{i\underline{19}} = -\frac{1}{\lambda} \varDelta^{-1} B_{T\underline{19}} \nabla . v$$

Une fonction linéaire liant la vitesse d'écoulement du fluide 4 et les intensités $B_{i\underline{14}}$, $B_{i\underline{16}}$ et $B_{i\underline{19}}$ est par exemple la suivante :

$$B_{i\underline{14}} - B_{i\underline{19}} = \frac{1}{\lambda} \varDelta^{-1} (v . \nabla) . B_{S\underline{14}} - \frac{1}{\lambda} \varDelta^{-1} (B_{T\underline{14}} . \nabla) . v + \frac{1}{\lambda} \varDelta^{-1} B_{T\underline{19}} \nabla . v$$

Le champ terrestre étant uniforme dans l'espace autour du vélocimètre 6, les intensités $B_{T\underline{14}}$ et $B_{T\underline{19}}$ sont égales. Par conséquent, la relation précédente devient :

$$B_{i14} - B_{i19} = \frac{1}{\lambda} \varDelta^{-1} (v . \nabla) . B_{S\underline{14}}$$

Ainsi, la différence entre les intensités $B_{i\underline{14}}$ et $B_{i\underline{19}}$ permet d'annuler ou de diminuer l'influence du terme $-\dfrac{1}{\lambda} \varDelta^{-1} (B_{T\underline{14}} . \nabla) . v$. Ceci augmente la linéarité du vélocimètre 6 en supprimant ou diminuant sa dépendance vis-à-vis du gradient de la vitesse d'écoulement.

En suivant le même raisonnement on peut écrire,

$$B_{i16} - B_{i19} = \frac{1}{\lambda} \varDelta^{-1} (v . \nabla) . B_{S\underline{16}}$$

Ici on utilise alors l'équation E3 linéaire suivante liant la vitesse v d'écoulement du fluide 4 dans les directions $\underline{x}$, $\underline{y}$ et $\underline{z}$ et les intensités $B_{i\underline{14}}$, $B_{i\underline{16}}$ et $B_{i19}$ :

$$B_{i16} + B_{i14} - 2B_{i19} = \underline{K} . v \ (Equation \ E3)$$

où $\underline{K} = \dfrac{1}{\lambda} \varDelta^{-1} . \nabla . (B_{S\underline{16}} + B_{S\underline{14}})$

La pente $\underline{K}$ dans l'équation E3 peut être calculée ou déterminée de façon expérimentale. Ici, lors de la tâche 81, elle est déterminée expérimentalement à partir de la vitesse $v_{1x}$ connue et des mesures des mesures des intensités $B_{i14}$, $B_{i16}$ et $B_{i19}$. La pente $\underline{K}$ est donc déterminée à partir de mesures à vitesse connue.

De préférence, l'étape 70 est réalisée plus d'une fois avec des vitesses connues couvrant la plage de vitesses que l'on désire mesurer. Ensuite, à chaque répétition, la pente $\underline{K}$ obtenue est moyennée avec les valeurs de pentes $\underline{K}$ obtenues précédemment.

Après avoir été calibré, on procède à une étape 84 d'utilisation du vélocimètre 6. Lors de l'étape 84, le fluide 4 s'écoule dans la canalisation 2 à une vitesse inconnue qui dans la suite de la description est notée $v_i$.

Initialement, lors d'une tâche 86, les capteurs 14, 16 et 19 mesurent les intensités $B_{14}$, $B_{16}$ et $B_{19}$ du champ

magnétique.

Ensuite lors d'une tâche 88, les intensités $B_{i14}$, $B_{i16}$ et $B_{i19}$ sont calculées à partir des intensités $B_{14}$, $B_{16}$ et $B_{19}$ *comme* décrit lors de la tâche 80.

Lors d'une tâche 90, l'unité de traitement calcule la vitesse $v_{ix}$ d'écoulement du fluide 4 à partir de $B_{i14}$, $B_{i16}$ et $B_{i19}$ et de la pente $\underline{K}$ déterminée lors de l'étape 70. Par exemple, pour cela la relation suivante est utilisée:

$$v_{ix} = (B_{i16} + B_{i14} - 2B_{i19})/\underline{K}$$

Le fait d'additionner les intensités $B_{i14}$ et $B_{i16}$ augmente la sensibilité du vélocimètre 6 tandis que le fait de soustraire à chaque intensité $B_{i14}$ et $B_{i16}$ l'intensité $B_{i19}$ augmente sa linéarité et diminue sa dépendance au champ magnétique extérieur.

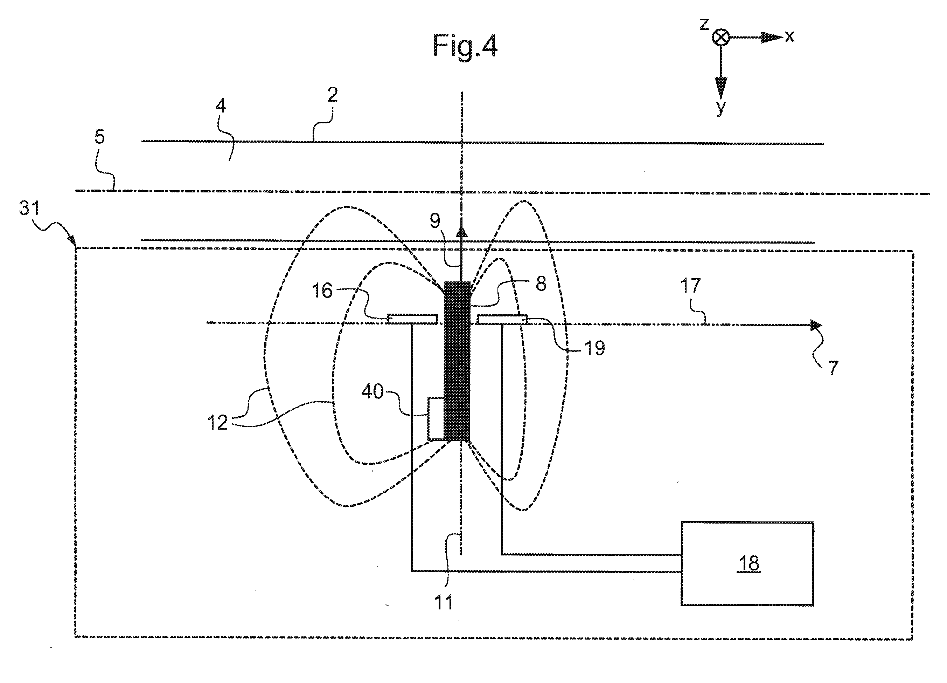

La figure 4 illustre un vélocimètre 31 identique au vélocimètre 6 à l'exception que le vélocimètre 31 comporte un perturbateur magnétique 40. Par perturbateur magnétique on désigne tout élément apte à déformer les lignes de champ 12 de la source 8. Le perturbateur 40 a pour fonction de déformer les lignes de champ 12 de la source 8 de manière à ce que pour vérifier la condition C0, il n'est plus nécessaire d'espacer le capteur 19 de la source 8 d'une distance D19$_1$ différente de la distance D16. Les lignes de champ étant asymétriques du fait de l'introduction du perturbateur 40, le capteur 19 peut être rapproché de la source 8 tout en vérifiant la condition C0. Ici, le perturbateur 40 supprime la symétrie des lignes de champ 12 par rapport au plan passant par l'axe 11 et parallèle aux directions $\underline{y}$ et $\underline{z}$. Le vélocimètre 31 est donc plus compact que le vélocimètre 6.

Par exemple, le perturbateur 40 est un aimant permanent juxtaposé à la source 8. Dans ce cas, l'axe d'aimantation du perturbateur 40 portant son moment magnétique ne doit pas être confondu avec l'axe 11 de la source 8 pour supprimer la symétrie des lignes de champs 12. Ici, le moment magnétique du perturbateur 40 est orienté dans une direction différente de celle de la source 4. Par exemple, le moment magnétique du perturbateur 40 est dirigé dans une direction opposée à celui de la source 8. Le perturbateur 40 est disposé plus proche du capteur 16 que du capteur 19. Ici, le capteur 19 est positionné à une nouvelle distance D19$_2$ de la source 8. De préférence, la distance D19$_2$ est inférieure à la distance D19$_1$ du vélocimètre 6. Dans ce mode de réalisation, le capteur 14 a été omis. Ici, le capteur 19 est disposé d'un côté de la source 8 et le capteur 16 est disposé de l'autre côté. Par exemple, les distances D16 et D19$_2$ sont égales.

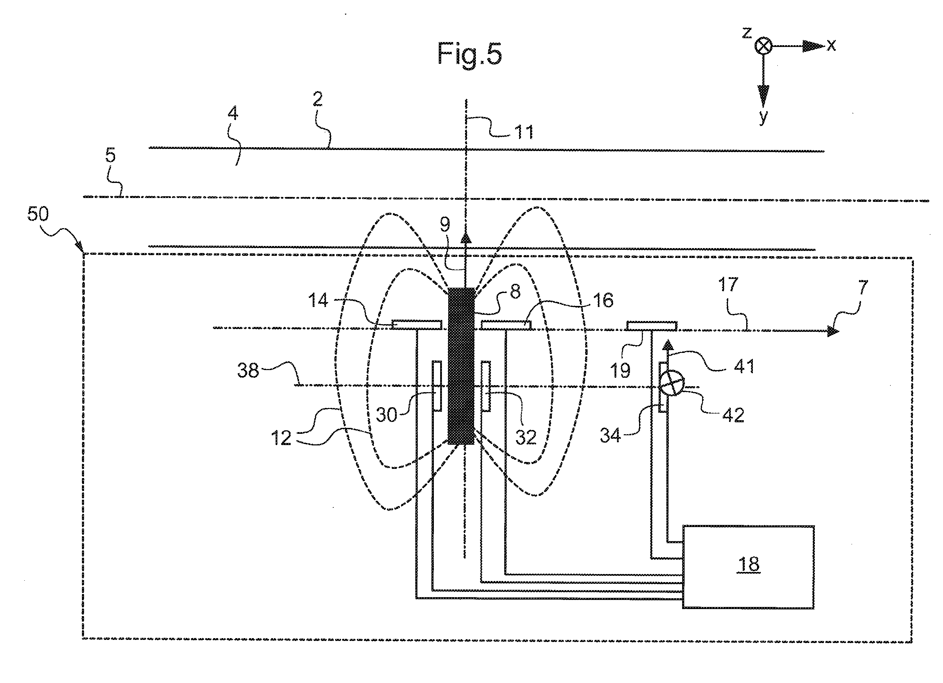

Le figure 5 illustre un vélocimètre 50 identique au vélocimètre 6 à l'exception qu'il est conçu pour mesurer la vitesse d'écoulement dans trois directions différentes. De préférence, il est donc destiné à être utilisé pour mesurer la vitesse de l'écoulement d'un fluide à l'intérieur d'un conduit permettant plusieurs directions d'écoulement. A cet effet, le vélocimètre 50 est équipé d'un troisième, d'un quatrième et d'un cinquième capteurs 30, 32 et 34. Les capteurs 30, 32 et 34 sont des capteurs biaxes. Ils mesurent l'intensité du champ magnétique dans des directions de mesure 41 et 42, respectivement, parallèles aux directions $\underline{y}$ et $\underline{z}$. Les capteurs 30, 32 et 34 sont, par exemple, alignés sur un axe 38 perpendiculaire à l'axe 11 d'aimantation de la source 8.

Les capteurs 30 et 32 sont situés de part et d'autre de la source 8 à des distances, respectivement D30 et D32. Ici, les capteurs 30 et 32 sont disposés de telle sorte qu'en absence d'écoulement du fluide 4, les intensités mesurées par les capteurs 30 et 32 sont égales. A cet effet, les distances D30 et D32 sont égales. Par exemple, les capteurs 30 et 32 sont des sondes à effet Hall.

Le capteur 34 est situé à une distance D34 de la source 8. Il est disposé de manière à ce qu'en absence d'écoulement du fluide 4 dans le canal 2, la différence entre les intensités des champs magnétiques mesurés dans les directions $\underline{y}$ et $\underline{z}$ par les capteurs 32 et 34 est non nulle. De préférence, il est disposé de manière à ce qu'en absence d'écoulement du fluide 4 dans la canalisation 2, la différence entre les intensités des champs magnétiques mesurées par les capteurs 32 et 34 est supérieure à la plus petite de ces intensités. A cet effet, ici, la distance D34 est choisie de manière à ce que la valeur absolue de la différence des distances D32 et D34 est supérieure à la plus petite des distances D32 et D34.

Les capteurs 30, 32 et 34 sont reliés à l'unité de traitement 18. L'unité de traitement 18 calcule les différences entre les intensités mesurées par les capteurs 30, 34 et 32, 34 et calcule les vitesses d'écoulement $v_{iy}$ et $v_{iz}$ du fluide 4, respectivement, dans les directions de mesure 41 et 42.

Le fonctionnement du vélocimètre 50 est similaire à celui du vélocimètre 6 sauf que la vitesse du fluide est calculée selon les trois directions de mesure 7, 41, et 42. En particulier, la calibration et le calcul des vitesses $v_{iy}$ et $v_{iz}$ se déduit des explications données pour le calcul de la vitesse $v_{ix}$.

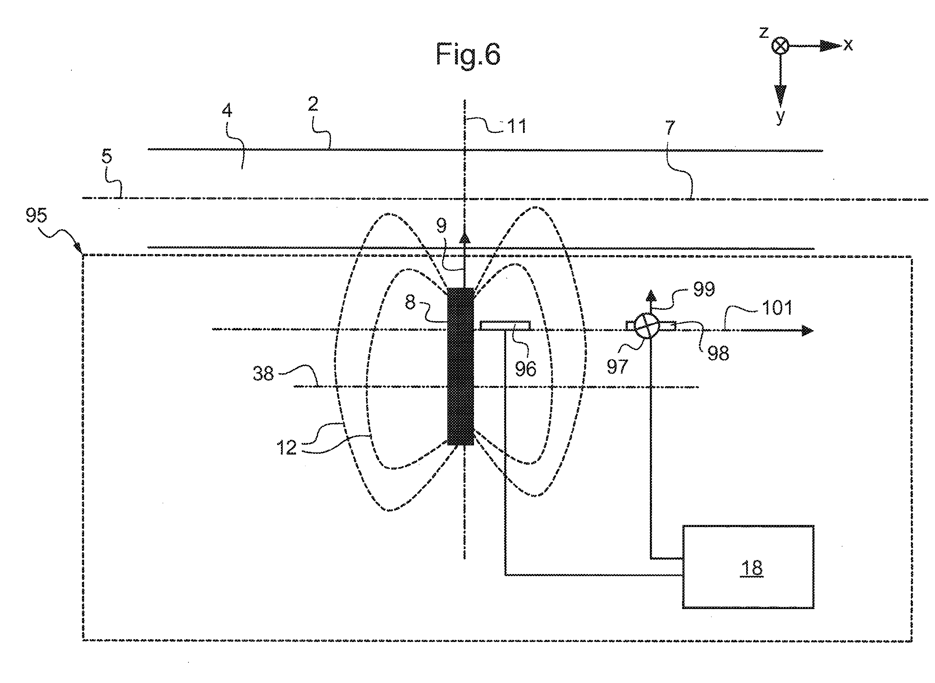

La figure 6 illustre un vélocimètre 95 identique au vélocimètre 50 à l'exception que les capteurs 14, 16, 19, 30, 32 et 34 sont remplacés par des capteurs triaxes 96 et 98 apte chacun à mesurer l'intensité du champ magnétique dans trois directions 97, 99, et 101 de mesure orthogonales entre elles. Ici, les capteurs 96 et 98 sont disposés d'un même côté de la source 8. C'est-à-dire qu'ils se trouvent du même côté d'un plan passant par l'axe d'aimantation 11 de la source 8 et parallèle aux directions *y* et *z*.

Le fonctionnement du vélocimètre 95 se déduit du fonctionnement du vélocimètre 6 à l'exception qu'une seule mesure de l'intensité du champ magnétique est prélevée à proximité de la source contre deux pour le vélocimètre 6. Ce vélocimètre 95 mesure la vitesse d'écoulement selon les trois directions de mesures des capteurs 96 et 98.

De nombreux autres modes de réalisation sont possibles. Par exemple, la source 8 de champ magnétique primaire peut être remplacée par toute sorte de source localisée de champ magnétique intense. Par source localisée on désigne une source qui génère un champ magnétique spatialement non homogène à l'échelle des distances qui séparent les capteurs du vélocimètre. Par exemple, la source 8 peut être une bobine conductrice ou supraconductrice. La source 8 peut être une source de champ magnétique continu ou alternatif.

Le vélocimètre ne se limite pas à la mesure de la vitesse d'écoulement du gallium liquide. L'écoulement de tout fluide électriquement conducteur peut être mesuré. Par exemple, le vélocimètre peut être utilisé pour mesurer la vitesse d'écoulement d'un plasma.

Dans un autre mode de réalisation, le champ magnétique primaire est modulé par un signal modulant prédéterminé et les intensités mesurées par les capteurs 14, 16, 19, 30, 32 et 34 ou 96 et 98 sont démodulées à l'aide du signal modulant. Un procédé de détection synchrone est donc mis en oeuvre. Par exemple, la détection du champ magnétique est réalisée comme dans les capteurs à vanne de flux plus connus sous le terme anglais de « fluxgate ».

La mesure de l'intensité du champ magnétique peut être assurée par tout système de mesure de champ ou de flux magnétique. Par exemple, les capteurs 14, 16, 30, 32, 34, 96 ou 98 peuvent être remplacés par des magnétorésistances, des bobines de Mirnov, des capteurs à effet Zeeman ou des vannes de flux.

Le nombre de capteurs de champ magnétique du vélocimètre 6 n'est pas limité à deux ou trois, il peut être supérieur ou égal à quatre.

L'axe 17 ou 38 ne traverse pas nécessairement la source 8.

En variante, pour se placer au plus près du fluide pour mesurer la vitesse d'écoulement, un logement est prévu dans les parois de la canalisation pour recevoir le vélocimètre.

Le perturbateur magnétique n'est pas nécessairement un aimant permanent. Tout élément donc la perméabilité magnétique est différente de 1 peut intervenir comme perturbateur magnétique. Par exemple, on peut utiliser comme perturbateur 40 des éléments en matériau magnétique tels que des matériaux ferromagnétiques ou ferrimagnétiques.

Il n'est pas nécessairement que la condition C1 soit respectée. Par exemple, le capteur 19 peut être proche ou très proche du capteur 16. Dans ce cas, l'intensité $B_{S19}$ n'est pas nécessairement négligeable devant l'intensité $B_{T19}$. Cela peut éventuellement limiter la sensibilité du capteur mais n'empêche pas l'amélioration de sa linéarité. Au contraire, dans certains cas étant donné que les capteurs 16 et 19 sont plus rapprochés, le terme $B_{i19}$ mesuré par le capteur 19 est plus proche du terme

$-\dfrac{1}{\lambda}\Delta^{-1}\left(B_{T\,16}.\nabla\right).v$  En effet, la vitesse du fluide à l'aplomb des capteurs 16 et 19 est strictement identique ce qui améliore la linéarité du vélocimètre.

Le procédé de la figure 3 ne se limite pas à la mesure de la vitesse d'écoulement des fluides incompressibles. L'utilisation du vélocimètre 6 pour des fluides faiblement compressible est parfaitement envisageable.

Lors de l'étape 70 du procédé de la figure 3, si l'écoulement du fluide dans la canalisation ne peut pas être arrêté, il est possible de réaliser la calibration du vélocimètre en déplaçant le vélocimètre suffisamment loin de manière à ce que dans ce cas l'intensité du champ magnétique induit mesurée par les capteurs 14, 16 et 17 soit négligeable devant l'intensité du champ magnétique permanent mesurée par ces mêmes capteurs. Dans ce cas, cette étape est par exemple réalisée dans l'atelier de fabrication du vélocimètre, de préférence, à une température proche de sa température d'utilisation lorsqu'il est fixé sur la canalisation.

Enfin, l'invention n'est pas limitée au cas où le fluide est guidé dans une canalisation. Tout récipient contenant un liquide conducteur peut être associé au vélocimètre de l'invention.

**Revendications**

1. Vélocimètre pour mesurer la vitesse d'écoulement d'un fluide électriquement conducteur, ce vélocimètre comportant :

   - une source (8) de champ magnétique primaire dont les lignes de champ (12) traversent le fluide (4) électriquement conducteur, et
   - un premier (16) et un deuxième (19) capteurs de champ magnétique mesurant chacun l'intensité du champ magnétique dans une même première direction de mesure (7),

**caractérisé en ce que** :

- les deux capteurs (16, 19) sont disposés de manière à ce que, en absence d'écoulement du fluide (4) électriquement conducteur, la différence entre les intensités mesurées par les deux capteurs (16 , 19) est non nulle, et
- le vélocimètre (6) comporte une unité de traitement (18) apte à calculer la vitesse d'écoulement du fluide dans une direction parallèle à la première direction de mesure (7) à partir de la différence entre les intensités mesurées par les deux capteurs (16, 19).

2. Vélocimètre selon la revendication 1, dans lequel les deux capteurs (16, 19) sont disposés de manière à ce que, en absence d'écoulement du fluide (4) électriquement conducteur, la différence entre les intensités du champ magnétique primaire mesurées par les deux capteurs (16, 19) est supérieure à la plus petite de ces intensités.

3. Vélocimètre selon l'une quelconque des revendications précédentes, dans lequel la source (8) comporte un axe d'aimantation (11) et les deux capteurs (16, 19) sont disposés d'un même côté d'un plan contenant l'axe d'aimantation (11).

4. Vélocimètre selon l'une quelconque des revendications précédentes, dans lequel le premier capteur (16) est situé à une distance D16 de la source (8) de champ magnétique primaire, et le deuxième capteur (19) est situé à une distance $D19_1$ de la source (8) de champ magnétique primaire, de manière à ce que la valeur absolue de la différence des distances D16 et $D19_1$ est supérieure à la plus petite des distances D16 et $D19_1$.

5. Vélocimètre selon l'une quelconque des revendications précédentes, comportant un perturbateur magnétique (40) disposé plus proche de l'un (16) des capteurs que de l'autre (19) de manière à ce qu'en absence d'écoulement du fluide (4), l'intensité mesurée par le premier capteur (16) est au moins deux fois supérieure à l'intensité mesurée par le deuxième capteur (19).

6. Vélocimètre selon la revendication 5, dans lequel les premier et deuxième capteurs (16, 19) sont disposés à égale distance de la source (8) de champ primaire.

7. Vélocimètre selon l'une quelconque des revendications précédentes, dans lequel :

- le vélocimètre (6) comprend un troisième capteur (14) de champ magnétique, le troisième capteur (14) étant apte à mesurer le champ magnétique dans la première direction de mesure (7), le troisième capteur (14) étant disposé par rapport à la source (8) de manière à ce que les intensités mesurées par le premier (16) et le troisième (14) capteurs soient égales en absence d'écoulement, et
- l'unité de traitement (18) est apte à calculer la vitesse d'écoulement du fluide (4) à partir :

- de la différence des intensités mesurées par les premier et deuxième capteurs (16,19),
- de la différence des intensités mesurées par les deuxième et troisième capteurs (19,14), et
- de la somme de ces différences.

8. Vélocimètre selon l'une quelconque des revendications précédentes, dans lequel la source (8) de champ magnétique primaire est une source de champ magnétique alternatif.

9. Vélocimètre selon l'une quelconque des revendications précédentes, dans lequel le champ magnétique primaire est modulé par un signal modulant prédéterminé et les intensités mesurées par les capteurs (14, 16, 19) sont démodulées à l'aide de ce signal modulant.

10. Vélocimètre conforme à l'une quelconque des revendication précédentes, dans lequel :

- le vélocimètre (6) comporte un quatrième (32) et un cinquième (34) capteurs de champ magnétique, mesurant l'intensité du champ magnétique dans au moins une seconde direction (41, 42) de mesure sécante à la première direction de mesure, et
- l'unité de traitement (18) est apte à calculer la vitesse d'écoulement du fluide dans la seconde direction (41, 42) de mesure des quatrième et cinquième capteurs (32, 34) à partir de la différence entre les intensités mesurées par les quatrième et cinquième capteurs.

11. Procédé de mesure de la vitesse d'écoulement d'un fluide électriquement conducteur comprenant l'émission (70) d'un champ magnétique primaire dont les lignes de champ (12) traversent le fluide (4) électriquement conducteur, **caractérisé en ce que** le procédé comporte :

- la mesure (72) de l'intensité du champ magnétique dans une première direction de mesure (7) par deux capteurs (16,19) disposés de manière à ce que, en absence d'écoulement du fluide (4) électriquement conducteur, la différence entre les intensités mesurées par les deux capteurs (16,19) est non nulle, et
- le calcul (74) de la vitesse d'écoulement à partir de la différence entre les intensités mesurées par les deux capteurs (16,19).

**Patentansprüche**

1. Geschwindigkeitsmesser zum Messen der Fließgeschwindigkeit eines elektrisch leitenden Fluids, wobei dieser Geschwindigkeitsmesser Folgendes aufweist:

   - eine primäre Magnetfeldquelle (8), deren Feldlinien (12) das elektrisch leitende Fluid (4) durchqueren, und
   - einen ersten (16) und einen zweiten (19) Magnetfeldsensor, die jeweils die Intensität des Magnetfeldes in einer ersten gleichen Messrichtung (7) messen,

   **dadurch gekennzeichnet, dass**

   - die beiden Sensoren (16, 19) so angeordnet sind, dass bei nicht vorhandener Strömung des elektrisch leitenden Fluids (4) die Differenz zwischen den von den beiden Sensoren (16, 19) gemessenen Intensitäten nicht null ist, und
   - der Geschwindigkeitsmesser (6) eine Verarbeitungseinheit (18) aufweist, die anhand der Differenz zwischen den von den beiden Sensoren (16, 19) gemessenen Intensitäten die Fließgeschwindigkeit des Fluids in einer Richtung berechnen kann, die parallel zu der ersten Messrichtung (7) verläuft.

2. Geschwindigkeitsmesser nach Anspruch 1, wobei die beiden Sensoren (16, 19) so angeordnet sind, dass bei nicht vorhandener Strömung des elektrisch leitenden Fluids (4) die Differenz zwischen den Intensitäten des primären Magnetfeldes, die von den beiden Sensoren (16, 19) gemessen werden, größer ist als die geringste dieser Intensitäten.

3. Geschwindigkeitsmesser nach einem der vorhergehenden Ansprüche, wobei die Quelle (8) eine Magnetisierungsachse (11) aufweist und die beiden Sensoren (16, 19) auf derselben Seite einer Ebene, die die Magnetisierungsachse (11) enthält, angeordnet sind.

4. Geschwindigkeitsmesser nach einem der vorhergehenden Ansprüche, wobei der erste Sensor (16) sich in einer Entfernung D16 von der primären Magnetfeldquelle (8) befindet, und der zweite Sensor (19) sich in einer Entfernung $D19_1$ der primären Magnetfeldquelle (8) befindet, so dass der absolute Wert der Differenz der Entfernungen $D16$ und $D19_1$ größer ist als die geringste der Entfernungen $D16$ und $D19_1$.

5. Geschwindigkeitsmesser nach einem der vorhergehenden Ansprüche, der einen magnetischen Störer (40) aufweist, der näher an dem einen (16) der Sensoren angeordnet ist als an dem anderen (19), so dass bei nicht vorhandener Strömung des Fluids (4) die von dem ersten Sensor (16) gemessene Intensität mindestens doppelt so hoch ist wie die von dem zweiten Sensor (19) gemessene Intensität.

6. Geschwindigkeitsmesser nach Anspruch 5, wobei der erste und der zweite Sensor (16, 19) in gleicher Entfernung von der primären Feldquelle (8) angeordnet sind.

7. Geschwindigkeitsmesser nach einem der vorhergehenden Ansprüche, wobei:

   - der Geschwindigkeitsmesser (6) einen dritten Magnetfeldsensor (14) aufweist, wobei der dritte Sensor (14) das Magnetfeld in der ersten Messrichtung (7) messen kann, wobei der dritte Sensor (14) im Verhältnis zu der Quelle (8) so angeordnet ist, dass die von dem ersten (16) und dem dritten (14) Sensor gemessenen Intensitäten bei nicht vorhandener Strömung gleich sind, und
   - die Verarbeitungseinheit (18) die Fließgeschwindigkeit des Fluids (4) berechnen kann, und zwar anhand:

- der Differenz der von dem ersten und dem zweiten Sensor (16, 19) gemessenen Intensitäten,
- der Differenz der von dem zweiten und dem dritten Sensor (19, 14) gemessenen Intensitäten, und
- der Summe dieser Differenzen.

**8.** Geschwindigkeitsmesser nach einem der vorhergehenden Ansprüche, wobei die primäre Magnetfeldquelle (8) eine magnetische Wechselfeldquelle ist.

**9.** Geschwindigkeitsmesser nach einem der vorhergehenden Ansprüche, wobei das primäre Magnetfeld durch ein vorgegebenes modulierendes Signal moduliert wird und die von den Sensoren (14, 16, 19) gemessenen Intensitäten mit Hilfe dieses modulierenden Signals demoduliert werden.

**10.** Geschwindigkeitsmesser nach einem der vorhergehenden Ansprüche, wobei:

- der Geschwindigkeitsmesser (6) einen vierten (32) und einen fünften (34) Magnetfeldsensor aufweist, die die Intensität des Magnetfelds in mindestens einer zweiten Messrichtung (41, 42) messen, die die erste Messrichtung schneidet, und
- die Verarbeitungseinheit (18) die Fließgeschwindigkeit des Fluids in der zweiten Messrichtung (41, 42) des vierten und des fünften Sensors (32, 34) anhand der Differenz zwischen den von dem vierten und dem fünften Sensor gemessenen Intensitäten berechnen kann.

**11.** Verfahren zum Messen der Fließgeschwindigkeit eines elektrischen leitenden Fluids, das die Emission (70) eines primären Magnetfeldes umfasst, dessen Feldlinien (12) das elektrisch leitende Fluid (4) durchqueren, **dadurch gekennzeichnet, dass** das Verfahren Folgendes umfasst:

- die Messung (72) der Intensität des Magnetfelds in einer ersten Messrichtung (7) durch zwei Sensoren (16, 19), die so angeordnet sind, dass bei nicht vorhandener Strömung des elektrisch leitenden Fluids (4) die Differenz zwischen den von den beiden Sensoren (16, 19) gemessenen Intensitäten nicht null ist, und
- die Berechnung (74) der Fließgeschwindigkeit anhand der Differenz zwischen den von den beiden Sensoren (16, 19) gemessenen Intensitäten.

**Claims**

**1.** A velocimeter for measuring the flow speed of an electrically conductive fluid, this velocimeter comprising:

- a source (8) of a primary magnetic field, the field lines (12) of which pass through the electrically conductive fluid (4), and
- first (16) and second (19) magnetic field sensors, each measuring the intensity of the magnetic field in a same first measurement direction (7),

**characterized in that**:

- the two sensors (16, 19) are disposed such that, in the absence of flow of the electrically conductive fluid (4), the difference between the intensities measured by the two sensors (16, 19) is non-zero, and
- the velocimeter (6) comprises a processing unit (18) able to calculate a flow speed of the fluid in a direction parallel to the first measurement direction (7) from the difference between the intensities measured by the two sensors (16, 19).

**2.** The velocimeter according to claim 1, in which the two sensors (16, 19) are disposed such that, in the absence of flow of the electrically conductive fluid (4), the difference between the intensities of the primary magnetic field measured by the two sensors (16, 19) is greater than the smaller of these intensities.

**3.** The velocimeter according to any one of the previous claims, in which the source (8) comprises a magnetization axis (11), and the two sensors (16, 19) are disposed on the same side of a plane containing the magnetization axis (11).

**4.** The velocimeter according to any one of the previous claims, in which the first sensor (16) is situated at a distance D16 from the source (8) of the primary magnetic field and the second sensor (19) is situated at a distance $D19_1$ from the source (8) of the primary magnetic field, such that the absolute value of the difference between distances

D16 and D19$_1$ is greater than the smaller of distances D16 and D19$_1$.

5. The velocimeter according to any one of the previous claims, comprising a magnetic disturber (40) disposed closer to one (16) of the sensors than to the other (19) so that, in the absence of flow of the fluid (4), the intensity measured by the first sensor (16) is at least double the intensity measured by the second sensor (19).

6. The velocimeter according to claim 5, in which the first and second sensors (16, 19) are equidistant from the source (8) of the primary field.

7. The velocimeter according to any one of the previous claims, in which:

   - the velocimeter (6) comprises a third magnetic field sensor (14), the third sensor (14) being able to measure the magnetic field in the first measurement direction (7), the third sensor (14) being disposed relative to the source (8) so that the intensities measured by the first (16) and third (14) sensors are equal in the absence of flow, and
   - the processing unit (18) is able to calculate the speed of flow of the fluid (4) based on:

     - the difference in intensities measured by the first and second sensors (16, 19),
     - the difference in intensities measured by the second and third sensors (19, 14), and
     - the sum of these differences.

8. The velocimeter according to any one of the previous claims, in which the source (8) of the primary magnetic field is an alternating magnetic field source.

9. The velocimeter according to any one of the previous claims, in which the primary magnetic field is modulated by a predetermined modulating signal and the intensities measured by the sensors (14, 16, 19) are demodulated with the aid of this modulating signal.

10. A velocimeter in conformance with any one of the previous claims, in which:

    - the velocimeter (6) comprises fourth (32) and fifth (34) magnetic field sensors, measuring the intensity of the magnetic field in at least one second measurement direction (41, 42) intersecting the first measurement direction, and
    - the processing unit (18) is able to calculate the flow speed of the fluid in the second measurement direction (41, 42) of the fourth and fifth sensors (32, 34) from the difference between the intensities measured by the fourth and fifth sensors.

11. A method of measuring the speed of flow of an electrically conductive fluid comprising the emission (70) of a primary magnetic field, the field lines (12) of which pass through the electrically conductive fluid (4),
    **characterized in that** the method comprises:

    - measuring (72) the intensity of the magnetic field in a first measurement direction (7) by two sensors (16, 19) disposed so that, in the absence of flow of the electrically conductive fluid (4), the difference between the intensities measured by the two sensors (16, 19) is non-zero, and
    - calculating (74) the speed of flow from the difference between the intensities measured by the two sensors (16, 19).

Fig.1

EP 2 577 322 B1

Fig.2

Fig.3

# Fig.4

EP 2 577 322 B1

Fig.5

Fig.6

EP 2 577 322 B1